# EUROPEAN PATENT SPECIFICATION

(11) **EP 0 618 882 B1**
(45) Date of publication and mention of the grant of the patent: **27.11.1996**
(21) Application number: 93900064.2
(22) Date of filing: 22.12.1992
(51) Int. Cl.: C01F 7/06

(54) **IMPROVED PROCESS FOR SEPARATING RED MUD IN PRODUCTION OF ALUMINA FROM BAUXITE**
VERFAHREN ZUR ABTRENNUNG VON ROTSCHLAMM BEI DER PRODUKTION VON ALUMINIUMOXID AUS BAUXIT
PROCEDE DE SEPARATION AMELIORE DE BOUE ROUGE, UTILISE DANS LA PRODUCTION D'ALUMINE A PARTIR DE LA BAUXITE

(30) Priority: 27.12.1991 JP 358173/91; 15.10.1992 JP 301594/92
(43) Date of publication of application: 12.10.1994
(73) Proprietor: ALCAN INTERNATIONAL LIMITED, Montreal Quebec H3A 3G2 (CA)
(72) Inventor: AMANO, Haruo, Shimizu-shi Shizuoka-ken (JP); NAKAYAMA, Noriaki, Shimizu-shi Shizuoka-ken (JP); PUXLEY, Donald, Jonquiere, Quebec G7S 2N3 (CA); CHAMBERLAIN, Douglas, M., Manchester (JM); STEWART, Fitzgerald, Kirkvine P.O. Manchester (JM)
(74) Representative: Gaunt, Robert John
(86) International application number: CA9200558
(87) International publication number: WO9313017

(56) References cited:
- EP-A- 0 382 383
- DE-A- 2 158 130
- GB-A- 522 691
- DATABASE WPI Week 7837, Derwent Publications Ltd., London, GB; AN 78-66497A/37
- DATABASE WPIL Week 9236, Derwent Publications Ltd., London, GB; AN 92-298419/36
- LIGHT METALS 1986, W.S. Peterson et al., (eds.), 1988, Metallurgical Society of AIME, Warrendale, PA (US); pp. 61-68

## Description

### Technical Field

This invention relates to a process for producing alumina from bauxite and, more particularly, to a Bayer process with an improved red mud separation stage.

### Background Art

In the Bayer process for producing alumina from bauxite, the bauxite containing aluminum trihydroxides or aluminum oxide-hydroxides is contacted with solutions containing caustic soda to dissolve the aluminum hydroxides as sodium aluminate while leaving most of the remaining constituents of the bauxite essentially unattacked in solid form. A part or all of the silica content of the bauxite may also dissolve in the caustic soda solution to form a soluble sodium silicate. This reacts relatively slowly with the sodium aluminate in solution to form complex hydrated sodium aluminum silicates, known collectively as "desilication product". These desilication products are of low solubility in the resulting sodium aluminate-caustic soda solutions and largely precipitate out of solution thereby removing much of the undesirable silica from the solution phase. However, there is the substantial cost of an appreciable loss of chemically-bound caustic soda and alumina in the desilication product.

After the digestion step for dissolving the aluminum hydroxide from the bauxite, the undissolved part of the bauxite, together with any desilication product that has precipitated at this point, which are known as "red mud", are separated from the solution, usually by filtration or sedimentation or both. The red mud is then disposed of, usually after being washed to recover the soluble valuables and the entrained caustic-aluminate solution. The clear caustic-aluminate solution after precipitation of the red mud, commonly known as "pregnant liquor", is subsequently cooled, diluted, seeded with aluminum trihydroxide crystals (gibbsite) and agitated for a period of time to precipitate a significant fraction of the dissolved alumina as gibbsite. This precipitate is then separated from the resulting spent liquor, which typically still contains in the order of half of the original dissolved alumina. A part of the separated gibbsite may be recirculated as seed material to the aluminum precipitation operation, while the remainder is washed to recover the soluble valuables from the entrained liquor, and is then suitably calcined to form alumina product of the Bayer process. The spent liquor may be re-concentrated, impurities may be removed and new caustic soda may be added to make up the feed to the digestion step.

The solubility characteristics of the aluminum hydroxides and caustic soda solutions usually require that the digestion step be carried out at high caustic soda concentration and high temperature in the circuit, and that the gibbsite precipitation step be carried out at lower temperatures. The levels of caustic soda concentration and temperature are typically determined by the type of aluminum hydroxide present in the bauxite, process economics and equipment constraints.

Key parts of the Bayer process consist of the digestion step and the red mud separation step in which the aluminum hydroxide minerals of the bauxite are brought into solution in caustic-aluminate solution as soluble sodium aluminate and the remaining insoluble residue (red mud) is separated from the resulting pregnant solution, leaving a clear caustic soda-sodium aluminate solution from which purified gibbsite can subsequently be crystallized. Since the nature of the solubility of the aluminum hydroxide minerals in caustic soda solutions usually requires that the digestion step be carried out at an elevated temperature in order to achieve higher solubilities of the alumina and hence reasonable liquor productivity (weight of alumina produced per volume of liquor circulated), while the precipitation step needs to be carried out at much lower temperatures to minimize the alumina solubility at this point in the process, it can be seen that equipment must be provided for heating the incoming liquor and bauxite to the temperature required for digestion and for cooling the liquor and red mud solids after digestion.

Most current Bayer plants make use of a digestion module and a mud separation module consisting basically of the equipment required to carry out the following sequence of operations:
(1) Preheating the incoming spent caustic aluminate liquor and bauxite passing to the digesters, using as much as possible recuperated heat followed by high-temperature heat from an external source;
(2) Carrying out the digestion while usually providing a residence time sufficient to permit removal of most of the silica dissolved from clay or quartz minerals in the bauxite by the precipitation of a complex sodium aluminosilicate desilication product;
(3) Cooling the slurry from the digester by flashing the slurry at one or more decreasing pressures down to about atmospheric boiling temperature and using the flashed steam recovered for preheating purposes;
(4) At or below atmospheric boiling temperature, separating the red mud residue from the pregnant aluminate liquor, typically by filtration, or by flocculation, sedimentation and polish-filtration of the clear solution.

GB-A-522691 discloses the separation of red mud from solutions in the Bayer extraction process and the treatment of the red mud suspension with starch or a starchy or farinaceous substance. Use is made of clear process liquor from the settling/washing steps for diluting this type of flocculant.

Fulford et al, European Patent Publication No. 0382383, published August 16, 1990 shows that the separation of the red mud from the digested slurry may be carried out at elevated pressure and at a temperature above the atmospheric boiling temperature of the liquor phase of the slurry. They found it to be particularly advantageous to carry out the separation at a temperature sufficiently high that the liquor phase of the slurry is below saturation or not significantly supersaturated with respect to soluble alumina constituents, e.g. gibbsite, during the red mud separation operation.

Red mud has a very small particle size of typically less than 10 µm and the viscosity of digested slurry is both high and variable depending upon the grade of bauxite. This presents a very difficult problem in carrying out sedimentation and separation of red mud within a short residence time. It has been known for some years to use a flocculant to aid in the sedimentation and separation of red mud from a Bayer slurry. The flocculant may be a natural polymeric compound, such as starch, or modified starch as described in published Japanese patent application JP-B 57-61691, polyacrylamide copolymers as described in published Japanese patent application JP-B 58-27211 or other water-soluble organic synthetic polymers. This flocculant is typically added to the red mud slurry during sedimentation and separation of the red mud.

It is known that in the sedimentation and separation of red mud, the lower the solid concentration of the slurry, the better is the sedimentation of the slurry after the addition of the flocculant thereto. This is described, for instance, by L.J. Connelly, "Synthetic Flocculant Technology in the Bayer Process", AIME Report (1986). It is also known from Surfactant Science Series, Vol. 27 "Reagents in Mineral Technology", Darce Dekker Inc. - U.S.A. pp. 519-558 (August 1987), that it is advantageous to use the flocculant in the form of a dilute solution having the lowest possible concentration.

Thus, one conventional method is to dilute the synthetic flocculant with water. However, water is not an ideal diluent for this purpose because it has very different properties with respect to pH, alkalinity, salt content and viscosity as compared to the liquid phase of the slurry to be separated. Consequently, the synthetic flocculant is deactivated on contact with the water, and its efficiency in the high salt, higher solids, higher pH liquid is reduced. Conventionally, the diluted flocculant is discharged directly into the feed well of the washing/settling vessel, at the same time that the slurry finely divided solids to be washed/settled is discharged into the feed well.

Another proposed process has been one in which red mud slurry to be treated is diluted with a circulating clear supernatant Bayer liquor and the resulting diluted slurry having a decreased red mud concentration is subjected to sedimentation and separation. In this system, the flocculant is added to the diluted slurry being fed to the red mud separator. The flocculant is preferably added as an aqueous solution having a concentration of about 0.5 to 10 g/litre. In order to obtain a satisfactory settling speed, the flocculant preferably is added to the raw slurry in an amount in the range of from 10 to 200 ppm.

It is also known to use a synthetic flocculant in a two-stage digestion of bauxite. For instance, in U.S. Patent 4,994,244 (Fulford) it is taught to subject a boehmitic alumina bauxite to a two-stage digestion and it is also known to subject a mixed boehmitic/gibbsitic alumina bauxite to two-stage digestion. In a two-stage digestion of the above type, if the digested slurry from the first stage digestion is supplied directly to a pressurized solid/liquid separator so as to fill the vessel with the slurry while the slurry is still at a temperature from 80 to 150°C, the pressure in the closed vessel rises in accordance with the slurry temperature and the pressure of the slurry. Because of the increased temperature, the viscosity of the slurry in the vessel is lowered and this favours the solid-liquid separation.

Also in high temperature, high pressure digestion of bauxite having a high boehmite content, a pressure settling separation is used to separate red mud from the digested slurry having a high temperature e.g. 250°C, for the purpose of effective utilization of the heat energy of the digested slurry.

However, with systems of the above type, the amount of circulating clear supernatant liquor and washing water that can be used is restricted to prevent excessive dilution in the concentration of the liquid phase of the digester slurry. In a pressurized solid/liquid separator, the efficiency of the flocculant is decreased as compared with a system using a liquid thickener or washing thickener open to the atmosphere, resulting in the need of a large amount of flocculant. For instance, concentrations of flocculant in the order of 1000 to 5000 ppm are required. However, use of such a large concentration of flocculant not only increases cost but also causes the problem of contaminating the digestion liquor. Therefore, there is clearly a need to reduce the amount of flocculant to as small a quantity as possible.

When the red mud separation is carried out under elevated pressure and temperature, there is an additional problem. In this system, when a flocculant is added, it is usually added directly to the sedimentation and separation stage in the form of a solution having a high flocculant concentration because this system utilizes a smaller volume of more concentrated liquor. If there are difficulties in the separation, one possible remedy is to further increase the flocculant concentration.

It is also possible to add washing water containing a low concentration of caustic to the red mud slurry to lower its concentration. However, this involves an increase in total liquid volumes and results in lowering the concentration of the free soda and sodium aluminate to be recovered and this increases the post-treatment costs.

It is the object of the present invention to find a more efficient system for contacting a synthetic flocculant with a Bayer process red mud slurry without increasing the concentration of flocculant used and without increasing the total volume of liquid in the system.

### Disclosure of the Invention

According to the present invention, it has now been discovered that the efficiency of the red mud separation procedure can be substantially improved if the synthetic polymer flocculant based on acrylamide and/or sodium acrylate normally used is diluted to less than 1000 ppm flocculant with a clear process liquor obtained from a prior, the same or a subsequent settling or washing step and thoroughly mixing this diluted flocculant solution with the red mud slurry to be separated, before it enters the solid/liquid separation step. This is advantageous when carried out in both a red mud separating system operated at atmospheric conditions and a red mud separating system operated at an elevated temperature and pressure such as that described in EP 0382383. It is also possible to utilize a double digestion system in which the digester slurry from the first digestion step is introduced into a pressure separator where it is separated at a pressure close to the first digestion pressure in order to reduce the cost of energy and equipment, while the slurry leaving the second digestion step is separated from the red mud under atmospheric conditions.

The digestion is typically carried out by digesting bauxite in fresh or recycled caustic soda or caustic-aluminate liquors at temperatures above the atmospheric boiling temperature of the liquor. A gibbsitic bauxite is typically digested at a temperature in the range of 120-150°C, while a boehmitic bauxite is typically digested at a temperature in the range of 220-260°C. The caustic liquor and bauxite slurry may be preheated together or separately first recuperatively by heat exchange and/or by live steam or a molten-salt heat transfer medium, etc.

The separation is carried out by a settling in the presence of a flocculant and, as stated above, this can be done at either atmospheric temperature or above atmospheric boiling temperature. However, when the separation is carried out at elevated temperatures, the pressure must also be elevated and this typically may be up to six atmospheres. The dilution of the flocculant according to the invention is to less than 100 ppm, preferably 1-50 ppm, for addition to the red mud slurry in a separation under normal pressure, while a dilution of less than 1000 ppm, preferably 10-800 ppm, is used for a separation under elevated pressure. Final traces of red mud are preferably removed from the pregnant liquor stream by means of a polishing-filtration operation. This can be performed in the conventional manner using leaf filters or sand filters or the like after the separated pregnant liquor has been cooled by flashing or surface heat exchange to the atmospheric boiling temperature or below.

It is particularly advantageous according to the invention to obtain at least part of the clear process liquor used as diluent from a settling or washing step either upstream or downstream from the settling or washing step at which the flocculant is being added. Thus, particularly where a high level of dilution is required there is insufficient clear process liquor available from the vessel where flocculant is being added. As explained earlier, dilution with water is not a desirable method and much superior results are obtained if all of the required diluent is clear process liquor from within the processing circuit.

It is also advantageous according to this invention to provide a very thorough mixing of the flocculant with the clear process liquor before adding the diluted flocculant to the red mud slurry. This can be done by the use of mixers, particularly line mixers, and by providing transfer pipes of at least 0.5 meter, and preferably more than five meters in length, to thereby provide a residence time for good contact and mixing.

The red mud solids which are removed in the separation step, and the liquor which is entrained with the solids are cooled to or below the atmospheric boiling temperature for passage to the red mud washing circuit.

### Brief Description of the Drawings

Preferred embodiments of this invention will now be described in association with the formal drawings in which:
Figure 1 is a flowsheet of a basic Bayer process according to the present invention;
Figure 2 is a flowsheet for a settler circuit operated according to the present invention under atmospheric pressure and using a line mixer;
Figure 3 is an alternative flowsheet for operating a settler circuit according to the present invention using a mixing tank;
Figure 4 is a flowsheet showing a multi-stage counter current settling circuit according to the invention for red mud;
Figure 5 is a flowsheet for a pressure decanter according to the invention;
Figure 6 is a flowsheet for a conventional settler circuit;
Figure 7 is a flowsheet for a conventional pressure decanter;
Figure 8 is a flowsheet for a conventional multi-stage settler circuit;
Figure 9 is a partial flowsheet for a red mud washing circuit according to the invention; and
Figure 10 is a partial flowsheet for further washing/settling stages according to the invention.

### Best Modes for Carrying Out the Invention

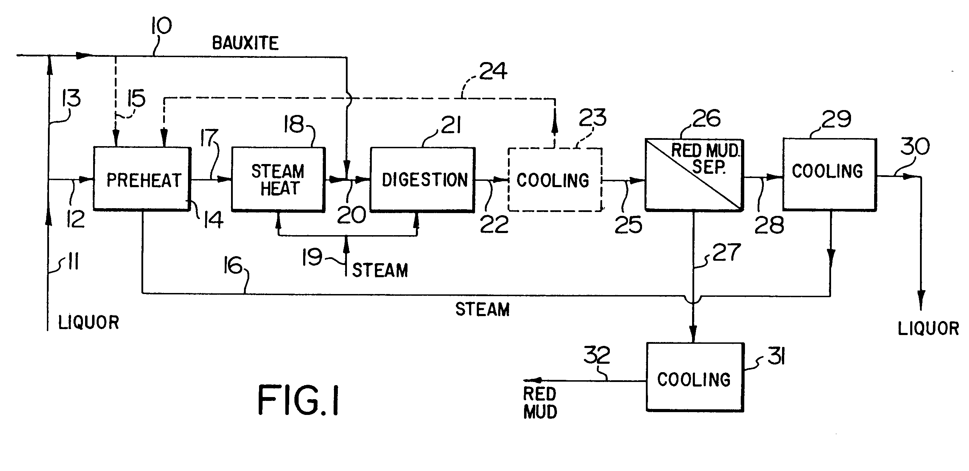

As shown in the flowsheet of Figure 1, bauxite is fed into the system through inlet line 10. This may typically be a gibbsitic bauxite or a boehmitic or a mixed bauxite. A recirculated spent liquor is fed to the system through line 11 with part being fed directly through line 12 into preheater 14 and part being fed through line 13 to the bauxite line 10 to form a slurry therewith. If desired, some or all of this bauxite slurry in line 10 may be fed via line 15 directly to the preheater 14.

Heat is supplied to the recuperative preheater 14 primarily by flash steam 16 from a downstream portion of the process. Preheated liquor emerging from preheater 14 via line 17 enters a second preheating stage 18 where further heating is conducted by live steam 19. Alternatively, a molten salt or similar heat transfer medium may be employed in a surface heater. The material discharging from preheater 18 in line 20 is mixed with the bauxite slurry from line 10 and this slurry mixture is fed into a digester 21. Further live steam 19 may be supplied as required to digester 21 to achieve the necessary digestion temperature.

A gibbsitic bauxite is typically digested at a temperature in the range of 120-150°C, while a boehmitic bauxite is typically digested at a temperature in the range of 220-260°C.

The digested slurry is discharged through line 22. Optionally, if any partial cooling is required, this may be done in stagewise liquid flash cooling system 23 with any flash steam formed being recovered and recycled to recuperative preheater 14.

The slurry discharging from either cooler 23 or digester 21 is fed to a red mud separator 26, e.g. a pressure decanter plus polish filter combination where separation is carried out either at digestion temperature or at a lower temperature, but which is still above the atmospheric boiling temperature of the liquor.

The separated red mud is drawn off through discharge 27, is cooled in apparatus 31 and the thickened red mud 32 is fed to washing.

The pregnant liquor from separator 26 is fed via line 28 to a stagewise liquid flash cooling system 29. The steam flashed off is recycled via line 16 to preheater 14, while the cooled pregnant liquor is withdrawn through line 30 for subsequent processing.

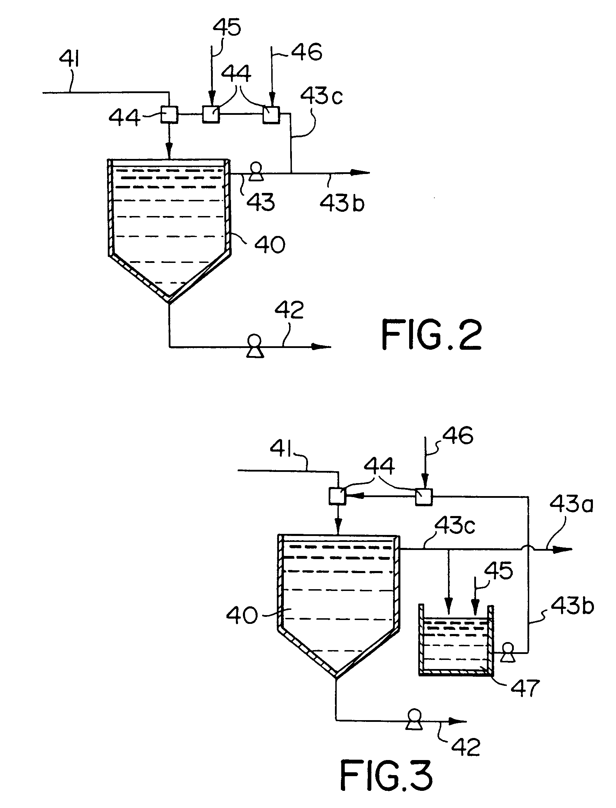

Figure 2 shows a settler system according to the invention with a settler 40 with a Bayer process digester slurry containing red mud 41 flowing into the feed well of settler 40. Within the settler, the slurry is separated into a clear overflow liquor 43 and a thickened red mud underflow 42. The clear overflow is divided into a major stream 43b which is withdrawn from the system and a minor recirculating stream 43c, which optionally is mixed with make up water 46 in a line mixer 44, then mixed with flocculant 45 in a second line mixer 44 and this mixture is finally added and thoroughly mixed with the incoming stream of Bayer process slurry 41 in a further line mixer 44. The final mixture then enters the feed well of the settler 40.

The settler system of Figure 3 is similar to that of Figure 2, but part of the overflow stream of clear liquor 43c is fed to a mixing tank 47 where it is mixed with the flocculant 45, while the remainder 43a is returned to the main process stream 43b. The mixed stream of clear overflow liquor and flocculant is then circulated back to settler 40 through a line mixer 44 where optionally it is mixed with causticized water 46, and then through a further line mixer 44 where it is mixed with the incoming slurry stream 41 and the mixture is then fed to the feed well of settler 40.

In another embodiment the recirculated stream of clear overflow liquor, after being mixed with flocculant, is divided into two or more streams which are fed to two or more separate line mixers to provide increased mixing of flocculant with process slurry feedstock.

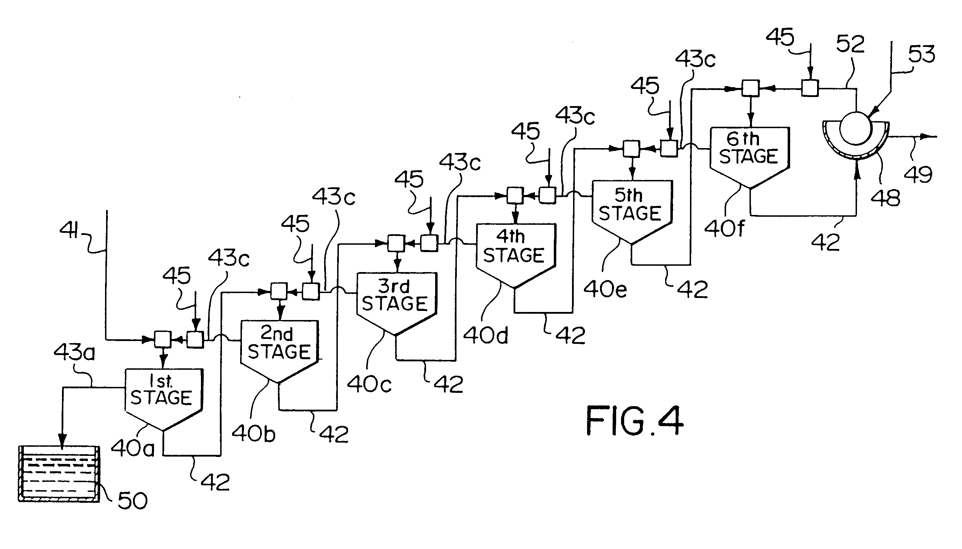

Figure 4 illustrates a multi-stage settler system which operates under normal pressure. In this embodiment, six settler stages 40a-f are shown with Bayer process digester red mud slurry being fed in through inlet line 41 and into the first stage 40a. A clear overflow stream 43a is withdrawn from settler 40a and collected in vessel 50, while a thickened underflow slurry 42 is withdrawn and fed into the feedwell of the second stage 40b. The clear overflow liquor from the second stage 40b is mixed with flocculant 45 in a line mixer and then mixed with the incoming slurry stream 41 in a further line mixer with the mixture thus obtained being fed into the feed well of the first stage settler 40a.

This same circuit sequence is utilized in each of the following stages with the underflow thickened slurry 42 from the sixth stage 40f being fed into a filter 48. Wash water 53 is added to the filter and a filter cake 49 is withdrawn. The filtrate 52 is circulated to the sixth stage 40f and during this recirculation is mixed with flocculant 45 in a line mixer and is then mixed with the thickened slurry underflow stream 42 from the fifth stage 40e in a further line mixer to form the feed mixture to the feed well of the sixth stage 40f.

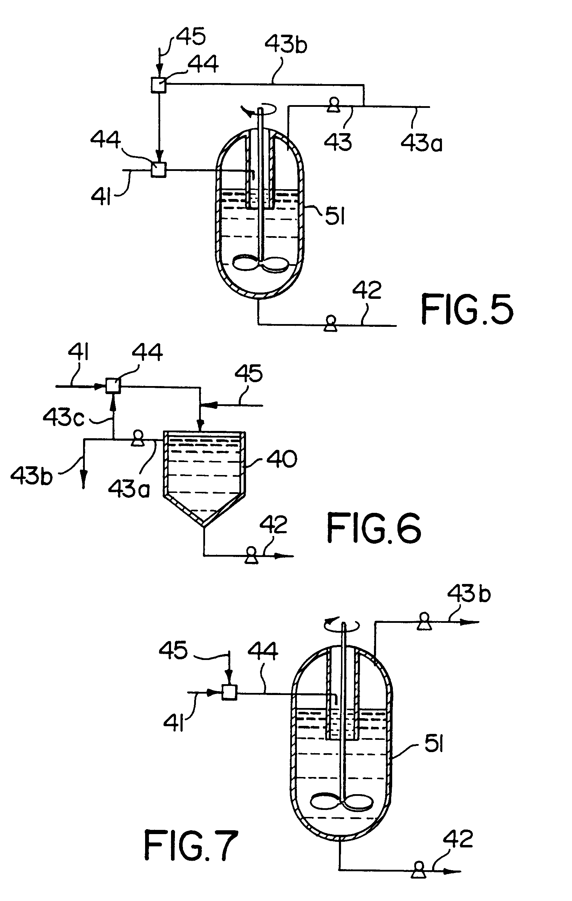

A settler in the form of a pressure decanter 51 is shown in Figure 5. The Bayer process red mud slurry feed is fed in through inlet line 41 and is mixed in a line mixer 44 with a portion 43b of the clear overflow liquor which has been mixed with flocculant 45 in a line mixer 44. Thickened red mud slurry is withdrawn through underflow 42 and a portion of the clear overflow liquor 43b is withdrawn from the system.

The decanter is, in principle, a closed system. The feed slurry has a typical red mud concentration of 20-100 g/l, while the thickened underflow has a red mud concentration of 200-1000 g/l. The clear overflow liquor typically has a suspended solids concentration of less than 100 g/l. Before dilution, the flocculant typically has a concentration of 0.5-10 g/l and flows into and out of the decanter are set such that the clear liquor ascending velocity is in the range of 1-50 m/hr.

Figure 6 shows a conventional settler system with the usual settler 40 being fed by a feedstock consisting of a mixture of a portion 43c of clear overflow liquor which is mixed in a line mixer with red mud slurry 41 and this mixture being directly mixed with a stream of flocculant 45. Again, a portion of the clear overflow liquor is withdrawn by a line 43b and the thickened underflow red mud slurry is withdrawn through line 42.

Figure 7 is a conventional circuit utilizing a pressure decanter 51 and here the flocculant 45 is mixed with the stream of Bayer process slurry 41 in a line mixer 44 before being fed into the decanter 51. A clear overflow liquor is collected via line 43b and a thickened red mud slurry underflow is collected via line 42.

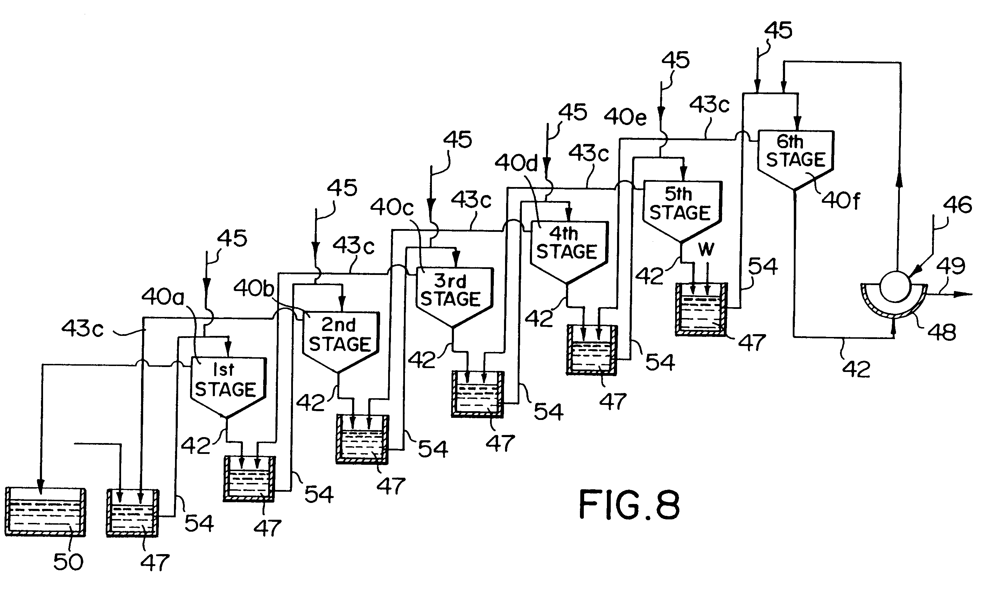

Figure 8 shows a conventional multi-stage settler system which resembles that of Figure 4, using the same six settlers 40a-f. However, in this embodiment, rather than feeding the Bayer process slurry 41 into a line mixer, it is fed into a mixing tank 47 where it is combined with the clear overflow liquor 43c from second stage 40b. This mixture is then fed by line 54 to first stage settler 40a, being mixed with flocculant 45 prior to entering settler 40a. Each of the subsequent settlers 40b-f has a mixing tank 47 associated therewith and the sequence is repeated with each stage. However, the thickened underflow slurry 42 from the sixth stage 40f is fed to a filter 48 where it is washed with water 46 and a filter cake 49 is collected. The filtrate from this filter 48 is recirculated back to the mixing tank 47 for the sixth stage 40f.

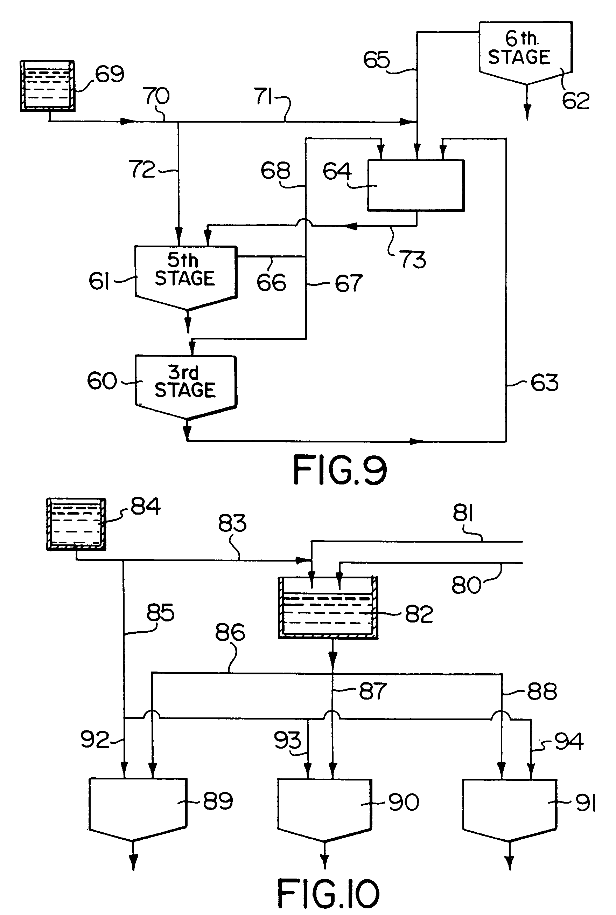

Figure 9 shows part of a multi-stage red mud washing circuit which includes a third stage settler 60, a fifth stage settler 61 and a sixth stage settler 62. The underflow 63 from the third stage 60 is fed to a mixing vessel 64. The overflow 65 from the sixth stage 62 is also fed into mixing vessel 64, together with the clear overflow from the fifth stage. This clear overflow 66 is split into a major portion 67 which is directed to the third stage 60 and a minor portion 68 which goes to the mixing vessel 64.

A concentrated synthetic flocculant solution is stored in vessel 69 and the discharge 70 from this is split into a major portion 71 representing about 50 to 90% of the total flow, which is injected into the clear overflow stream 65 from the sixth stage 62. Here it is diluted and remains activated in the stream of flocculant in the clear overflow 65. A minor portion of the flocculant 72 (10 to 20% of the total flow) is discharged directly into the feedwell of the fifth stage 61.

In the mixing vessel 64, the underflow 63 from the third stage 60 is mixed with the diluted flocculant in clear overflow liquor and the minor portion 68 of the clear overflow from the fifth stage 61. The mixture is discharged through discharge line 73, where further mixing takes place, and this is fed into the feedwell of the fifth stage 61 where it combines with the minor portion of synthetic flocculant 72. Line 73 is preferably long, e.g. more than 20 meters, to allow for thorough mixing and contact with the flocculant.

It was found that operating on a commercial basis with the above system, a composition could be obtained in the fifth stage (61) which contained 50-60 g/l of Na₂CO₃, in which less than 5% of the particles was less than 325 mesh.

Figure 10 shows an application to the sixth and seventh stages of washing, which comprise washing/settling vessels operated in parallel.

Three parallel settlers 89, 90 and 91 are shown and the underflow stream 80, rich in solids from the fifth stage of washing and the overflow of clear liquor from the seventh washing stage 81 are both fed into mixing vessel 82. Synthetic flocculant solution from the holding tank 84 is split into a minor portion 85 and a major portion 83. The major portion 83 is injected into the pipe 81 carrying clear overflow liquor prior to discharge into vessel 82. The synthetic flocculant becomes diluted and remains activated in this system. A solids rich underflow 80 is also fed into vessel 82 and is mixed with the clear overflow liquor stream containing flocculant in the mixing vessel 82. This provides good contact in mixing with the solid particles. The discharge from the mixing vessel 82 is split into three equal streams 86, 87 and 88 which are directed to the feed wells of settlers 89, 90 and 91 respectively. These feed lines provide at least 15 meters of pipe length which provides further mixing and contact between the synthetic flocculant and the particles.

The minor stream of undiluted flocculant 85 may also be split into three equal streams 92, 93 and 94 and directed into the feed wells of the settlers 89, 90 and 91 respectively where they are mixed with the flows 86, 87 and 88.

The flowlines 86, 87 and 88 and flocculant lines 92, 93 and 94 may be fitted with shutoff valves so that any one or more of the three washing/settler vessels 89, 90 and 91 can be taken out of operation.

### Example 1

A red mud separation was carried out using the system shown in Figure 2. A digester slurry from the Bayer process had a mud concentration of 45 g/l and comprised sodium aluminate solution and red mud. A separator vessel 40 was used having a capacity of 2400 m³ and a settling area of 355 m². Bayer process digester slurry 41 was fed to the separator 40 at a flow rate of 900 m³/hr while a part (100 m³/hr) of clean supernatant liquor 43c from the separator was circulated back to the slurry as a recirculating clear supernatant liquor. The amount of clear supernatant liquor 43b drawn out of the system was 20 m³/hr, while the amount of thickened underflow red mud slurry 42 collected was 80 m³/hr.

The flocculant 45 which was used was a aqueous 3% solution of a polyacrylic acid coagulant sold under the name Aronfloc, trademark of Toa Synthetic Chemical Co. This was added to the recirculating clear supernatant liquor 43c from the separator and was uniformly blended therewith in a line mixer 44. The resulting clear supernatant liquor containing flocculant was then introduced into the separator 40. Using this procedure, the amount of flocculant required for treating one ton (dry weight) of red mud while maintaining a mud concentration in the bottom drain slurry of 500 g/l was 30 g.

### Example 2 (Comparative)

As a comparison for Example 1, the same red mud slurry was treated as in Example 1 except that the device of Figure 6 was used for the separation. Using the same procedure as in Example 1, the amount of flocculant needed to treat one ton (dry weight) of red mud while maintaining a mud concentration in the drain slurry 42 of 500 g/l was found to be 60 g which was twice the amount needed in Example 1.

### Example 3

For this procedure a six-stage continuous counter-current system of Figure 4 was used comprising six settler vessels 40a, 40b, 40c, 40d, 40e and 40f with a capacity of 1900 m³ and a settling are of 530 m². With this system, Bayer process digester slurry 41 having a red mud concentration of 500 g/l was fed to the first stage separator 40a at a flow rate of 80 m³/hr, while the amount of clean supernatant R drawn out of the first stage separator 40a and the flow of the circulating clear supernatant liquor 43c to each of the separators 40b-f were determined to be 100 m³/hr each, the flow rate of each of the thickened underflow slurries 42 to be drained from the bottom of each separator was determined to be 80 m³/hr. The amount of circulating water, which is a mixture of filtrate 52 from filter 48 and the washing water 53 freshly introduced into separator T6 was 100 m³/hr. A filter cake 49 of red mud was recovered from filter 48. A flocculant 45 in the form of an aqueous 3% solution of sodium polyacrylate-polyacrylic acid amide copolymer (Aronfloc) was added to the circulating clean supernatant liquor 43c and the circulating water 52 being circulated and supplied to the respective vessels 40a-f. The amount of flocculant needed in each separator for treating one ton (dry weight) of red mud obtained with a red mud concentration of the thickened underflow slurry 42 from the first stage separator 40a being 450 g/l and the mud concentration of each underflow slurry from each of the second to fifth stage separators 40b-f was 500 g/l. The optimum settling condition was in the six-stage separator 40f and the results obtained are shown in Table 1 below:

**Table 1**

| | Amount of Red Mud Flocculant Used (g) | | | | | |
|---|---|---|---|---|---|---|
| | 1st-Stage ₁ | 2nd-Stage ₂ | 3rd-Stage ₃ | 4th-th Stage ₄ | 5th-th Stage ₅ | 6th-th Stage ₆ |
| Example 3 | 13 | 12 | 10 | 8 | 7 | 10 |
| Comparative Example 4 | 40 | 60 | 40 | 35 | 35 | 90 |

The concentration of the red mud as finally obtained by sedimentation and separation and the water content of the filter cake from the separated red mud were measured. Also, the amounts of sodium hydroxide and alumina which were lost during the production of one ton alumina were measured. The results are given in Table 2 below.

**Table 2**

| | Drain Slurry from 6th-stage | | Loss (kg) per ton of alumina produced | |
|---|---|---|---|---|
| | red mud concentration (g/liter) | water content in filtered cake (%) | NaOH | Al₂O₃ |
| Example 3 | 650 | 65 | 4.73 | 3.02 |
| Comparative Example 4 | 530 | 75 | 6.37 | 4.51 |

### Example 4 (Comparative)

This is a comparative example for comparing the results of Example 3 and for this test the continuous counter-current system shown in Figure 8 was used. This was composed of the same six separator vessels as shown in Figure 4, having a capacity of 1900 m³ and a settling area of 530 m³ and mixing tanks 47. The same digester slurry that was used in Example 3 was subjected to sedimentation and separation under the same conditions as in Example 3 except that the flocculant 45 was introduced into the flow lines 54 from mixing tanks 47 to separators 40a-f. The amount of flocculant needed in each separator 40a-f for treating one ton (dry weight) of red mud obtained, determining the mud concentration of each drain slurry 42 from each separator 40a-f to be the same as that in example 2. The results obtained are shown in Table 2 above.

The concentration of the red mud was finally obtained by sedimentation and separation and the water content of the filter cake from the separated red mud was measured. The amounts of sodium hydroxide and alumina lost in the production of one ton alumina were also measured. The results obtained are also shown in Table 2 above.

### Example 5

This procedure used the pressure decanter 51 described in Figure 5 having a settling area of 5.7 m². A red mud slurry 41 from a Bayer process having a mud concentration of 141 g/l and a liquid temperature of 140°C was fed to the decanter 51. The slurry was fed at a rate of 156 m³/hr and part of the clear supernatant (15 m³/hr) from the decanter was circulated back to the slurry 41 as a circulating clear supernatant liquor 43c. The amount of the clear supernatant liquor 43b to be drawn out of the system was 120 m³/hr, and the amount of the underflow slurry 42 to be drained from the pressure decanter 51 was 36 m³/hr.

The flocculant 45 used was an aqueous 3% solution of polyacrylic acid (Nalco 7879, trademark of Nalco Corporation). This was diluted with causticized water and introduced into the circulating clear supernatant liquor 43c to provide a concentration of 190 ppm. These were thoroughly mixed in line mixer 44 to provide a flocculant liquor comprising the above flocculant 45 and the circulating clear supernatant liquor 43c. This liquor was then introduced into the slurry 41 and this was again uniformly mixed in a line mixer 44. The resulting mixture was fed into the pressure decanter 51 under liquid pressure of 3kg/cm².G and the liquid level ascending velocity in the pressure decanter was maintained between 20 and 30 m/hr. The mud concentration in the underflow slurry 42 was 800 g/l.

### Example 6 (Comparative)

Another test was carried out using a pressure decanter with the arrangement shown in Figure 7. For this test, a digester slurry 41 from a Bayer process having a mud concentration of 110 g/l and a liquid temperature of 140°C was fed at a flow rate of 126 m³/hr. The same flocculant was used as in Example 5 to have a concentration of 3000 ppm in the resulting mix. These were thoroughly admixed in line mixer 44 and supplied to the pressure decanter 51 under liquid pressure of 3kg/cm².G, with the largest mud concentration in the underflow slurry 42 being 404 g/l, with a clear liquor ascending rate in the pressure decanter of 16.1 m/hr and the amount of clear supernatant 43b being drawn out of the system being 92 m³/hr. The separating efficiency of this system was found to be poor as compared to Example 5.

### Technical Advantages

From the above results, it will be seen that the present invention provides the following advantages.
1) The amount of flocculant required in the method of the present invention is 1/2 to 1/5 less than that used in conventional methods;
2) The amount of water for dilution of the red mud flocculant is reduced or eliminated because of the circulation of clear supernatant liquor;
3) The growth of settled flocs was excellent and the interfacial settling rate was much higher (15 cm/min) than in a conventional method (0.5 cm/min). Thus, the working capacity of the system is substantially increased;
4) The mud concentration in the thickened slurry is as much as 20 to 50% higher than that in conventional systems so that the load on the filter in the post treating stages is reduced. The result of this is that the amount of valuable substances being drained out in the thickened slurries is significantly reduced;
5) When the present invention is used in a continuous counter-current system, the amount of water in the red mud filter cake as separated in the final stage is reduced in the order of 10% compared to the conventional methods. This means that the amounts of sodium aluminate and free soda to be carried out of the system along with the separated mud is reduced and therefore their recovery within the whole system is increased;
6) When the present invention is utilized in a pressurized solid/liquid separator, the energy efficiency of the entire process is increased and the separation of sodium aluminate solution and red mud from the digester slurry is effected in a very short period of time. As a result, liberation of the silicate components from bauxite is reduced as much as possible and the amount of flocculant required is also reduced. Thus, the influence of them on precipitation of aluminum hydroxide in the subsequent step may also be reduced; and
7) When the mixing operation of the present invention is carried out in a line mixer, a mixing tank is unnecessary so that the process line for the settling separation may be simplified and the plant space requirements reduced.

## Claims

1. A Bayer process for producing alumina from bauxite which comprises digesting bauxite slurry in caustic soda solution to dissolve aluminum hydroxides in the bauxite as sodium aluminate while leaving most of the remaining constituents of the bauxite in solid form as red mud, separating the red mud from the digested slurry by settling in the presence of a synthetic polymer flocculant based on acrylamide and/or sodium acrylate to obtain a caustic-aluminate pregnant liquor, washing the separated red mud, precipitating alumina hydrate from the pregnant liquor and calcining the alumina hydrate to obtain the alumina,
characterized in that the synthetic flocculant is diluted to a concentration of less than 1000 ppm for a separation under elevated pressure or diluted to a concentration of less than 100 ppm for a separation under normal pressure with a clear process liquor obtained from a prior, the same or a subsequent settling or washing step and mixing this diluted flocculant solution with the red mud slurry to be separated.

2. A process as claimed in claim 1, characterized in that the synthetic flocculant and the clear process liquor are mixed with a residence time sufficient to provide complete mixing prior to being added to the digester slurry.

3. A process as claimed in claim 2, characterized in that the synthetic flocculant and the clear process liquor travel a distance of at least 0.5 meter through a feed pipe to provide contact time.

4. A process as claimed in claim 1, 2 or 3, characterized in that the clear process liquor is obtained from an earlier or a subsequent settling or washing step.

5. A process as claimed in claim 1, 2 or 3, characterized by diluting a major portion of the synthetic flocculant in a portion of the clear overflow liquid from a subsequent settling step, combining this diluted flocculant with a solids rich underflow from a prior settling step, along with a minor portion of clear overflow liquid from the instant washing settling stage and transferring this mixture with further mixing during transfer, to the instant washing/settling step where it is combined with a minor portion of the synthetic flocculant solution, and then introducing the combined mixture into the washing/settling vessel.

6. A process as claimed in claim 1, characterized in that the red mud separation is carried out at atmospheric pressure and the diluted flocculant solution contains less than 100 ppm of the flocculant.

7. A process as claimed in claim 6, characterized in that the diluted flocculant solution contains 1-50 ppm of the flocculant.

8. A process as claimed in claim 1, characterized in that the red mud separation is carried out at a temperature and pressure above atmospheric and the diluted flocculant solution contains less than 1000 ppm of the flocculant.

9. A process as claimed in claim 8, characterized in that the diluted flocculant solution contains 10-800 ppm of the flocculant.

## Patentansprüche

1. Bayer-Verfahren zur Herstellung von Aluminiumoxid aus Bauxit, umfassend das Digerieren einer Bauxit-Aufschlämmung in einer Lösung von kaustischer Soda unter Auflösung von Aluminiumhydroxiden in dem Bauxit als Natriumaluminat, während der größte Teil der verbleibenden Bestandteile des Bauxits in fester Form als Rotschlamm verbleibt, Abtrennen des Rotschlamms von der digerierten Aufschlämmung durch Absetzen in Gegenwart eines synthetischen polymeren Flockungsmittels, aufgebaut auf Acrylamid und/oder Natriumacrylat, unter Erhalt einer kaustischen-Aluminat-Frischlauge, Waschen des abgetrennten Rotschlamms, Ausfällen von Aluminiumoxidhydrat aus der Frischlauge und Calcinieren des Aluminiumhydrats unter Erhalt von Aluminiumoxid, dadurch **gekennzeichnet**, daß das synthetische Flockungsmittel auf eine Konzentration von weniger als 1000 ppm für eine Abtrennung unter erhöhtem Druck verdünnt wird, oder auf eine Konzentration von weniger als 100 ppm für eine Abtrennung unter Normaldruck verdünnt wird, mit einer klaren Prozeßflüssigkeit, die von einer vorhergehenden, der gleichen oder einer nachfolgenden Absetzungs- oder Waschstufe erhalten wurde, und Vermischen dieser verdünnten Flockungsmittellösung mit dem abzutrennenden Rotschlamm.

2. Verfahren gemäß Anspruch 1, dadurch **gekennzeichnet,** daß das synthetische Flockungsmittel und die klare Prozeßflüssigkeit mit einer Verweilzeit vermischt werden, die ausreicht, um eine vollständige Vermischung vor der Zugabe zu der digerierten Aufschlämmung zu erreichen.

3. Verfahren gemäß Anspruch 2, dadurch **gekennzeichnet**, daß das synthetische Flockungsmittel in der klaren Prozeßflüssigkeit eine Entfernung von wenigstens 0,5 m durch eine Zuführleitung zurücklegt, um Kontaktzeit zur Verfügung zu stellen.

4. Verfahren gemäß Anspruch 1, 2 oder 3, dadurch **gekennzeichnet**, daß die klare Prozeßflüssigkeit von einer früheren oder nachfolgenden Absetz- oder Waschstufe erhalten wird.

5. Verfahren gemäß Anspruch 1, 2 oder 3, **gekennzeichnet** durch das Verdünnen eines Hauptteils des synthetischen Flockungsmittels in einem Teil der klaren Überfließflüssigkeit aus einer nachfolgenden Absetzstufe, Kombinieren dieses verdünnten Flockungsmittels mit einem feststoffreichen Sinkgut aus einer vorhergehenden Absetzstufe zusammen mit einem kleineren Teil einer klaren Überfließflüssigkeit aus der vorliegenden Wasch/Absetzstufe und Überführen dieser Mischung unter weiterem Vermischen während der Überführung in die vorliegende Wasch/Absetzstufe, wo sie mit einem kleineren Teil der synthetischen Flockungsmittellösung vereint wird, und anschließendes Einführen der vereinten Mischung in das Wasch/Absetzgefäß.

6. Verfahren gemäß Anspruch 1, dadurch **gekennzeichnet**, daß die Rotschlammabtrennung bei Atmosphärendruck durchgeführt wird, und daß die verdünnte Flockungsmittellösung weniger als 100 ppm des Flockungsmittels enthält.

7. Verfahren gemäß Anspruch 6, dadurch **gekennzeichnet**, daß die verdünnte Flockungsmittellösung 1 - 50 ppm des Flockungsmittels enthält.

8. Verfahren gemäß Anspruch 1, dadurch **gekennzeichnet**, daß die Rotschlammabtrennung bei einer Temperatur und einem Druck oberhalb des atmosphärischen durchgeführt wird, und daß die verdünnte Flockungsmittellösung weniger als 1000 ppm des Flockungsmittels enthält.

9. Verfahren gemäß Anspruch 8, dadurch **gekennzeichnet**, daß die verdünnte Flockungsmittellösung 10 - 800 ppm des Flockungsmittels enthält.

## Revendications

1. Un procédé Bayer pour la préparation d'alumine à partir de la bauxite, qui consiste à soumettre une suspension de bauxite à une digestion dans une solution de soude caustique afin de dissoudre les hydroxydes d'aluminium dans la bauxite sous forme d'aluminate de sodium tout en laissant la plus grande partie des constituants restants de la bauxite sous forme solide à l'état de boue rouge, a séparer la boue rouge de la suspension digérée par décantation en présence d'un agent flocculant du type polymère synthétique à base d'acrylamide et/ou acrylate de sodium pour obtenir une liqueur mère de type aluminate caustique, à laver la boue rouge séparée, à précipiter l'hydrate d'alumine de la liqueur mère et à calciner l'hydrate d'alumine afin d'obtenir l'alumine,
caractérisé en ce que l'agent flocculant synthétique est dilué jusqu'à une concentration inférieure à 1000 ppm pour une séparation sous pression élevée, ou bien dilué jusqu'à une concentration inférieure à 100 ppm pour une séparation sous pression normale avec une liqueur limpide traitée, obtenue à partir d'une étape de décantation ou de lavage, antérieure, identique ou subséquente, après quoi on mélange cette solution de flocculant dilué avec la suspension de boue rouge devant être séparée.

2. Un procédé tel que revendiqué dans la revendication 1, caractérisé en ce que l'agent flocculant synthétique et la liqueur limpide traitée sont mélangés pendant un temps de séjour suffisant pour obtenir un mélange complet avant d'être ajoutés à la suspension digérée.

3. Un procédé tel que revendiqué dans la revendication 2, caractérisé en ce que l'agent flocculant synthétique et la liqueur limpide traitée se déplacent sur une distance d'au moins 0,5 m à travers une canalisation d'alimentation afin d'obtenir un temps de contact.

4. Un procédé tel que revendiqué dans la revendication 1, 2 ou 3, caractérisé en ce que la liqueur limpide traitée est obtenue dans une étape de décantation ou de lavage, antérieure ou subséquente.

5. Un procédé tel que revendiqué dans la revendication 1, 2 ou 3, caractérisé par la dilution d'une partie prépondérante de l'agent flocculant synthétique dans une partie du liquide limpide d'écoulement supérieur provenant d'une étape de décantation subséquente, la combinaison de cet agent flocculant dilué avec un écoulement inférieur riche en produits solides provenant d'une étape de décantation antérieure, conjointement avec une partie plus faible du liquide limpide d'écoulement supérieur provenant de la présente étape de décantation/lavage et le transfert de ce mélange en le mélangeant ultérieurement pendant le transfert, vers la présente étape de lavage/décantation où il est combiné avec une portion plus faible de la solution d'agent flocculant synthétique, et ensuite l'introduction du mélange combiné dans le récipient de lavage/décantation.

6. Un procédé tel que revendiqué dans la revendication 1, caractérisé en ce que la séparation de la boue rouge est mise en oeuvre sous pression atmosphérique et que la solution d'agent flocculant dilué renferme au moins 100 ppm de l'agent flocculant.

7. Un procédé tel que revendiqué dans la revendication 6, caractérisé en ce que la solution d'agent flocculant dilué renferme de 1 à 50 ppm de l'agent flocculant.

8. Un procédé tel que revendiqué dans la revendication 1, caractérisé en ce que la séparation de la boue rouge est mise en oeuvre à une température et sous une pression supérieure à l'atmosphérique et que la solution d'agent flocculant dilué renferme moins de 1000 ppm de l'agent flocculant.

9. Un procédé tel que revendiqué dans la revendication 8, caractérisé en ce que la solution d'agent flocculant dilué renferme de 10 à 800 ppm de l'agent flocculant.
